# EUROPEAN PATENT SPECIFICATION

(11) **EP 2 886 485 B1**
(45) Date of publication and mention of the grant of the patent: **31.10.2018**
(21) Application number: 14156926.9
(22) Date of filing: 27.02.2014
(51) Int. Cl.: B65D 77/20, B65D 51/20

(54) **Sealing cover for containers with increased heat resistance, easy-opening performance and sealability**
Verschlussdeckel für Behälter mit erhöhter Hitzebeständigkeit, leichtem Öffnen und Verschließbarkeit
Couvercle d'étanchéité pour conteneurs présentant une meilleure résistance thermique, des performances d'ouverture facile et de soudabilité

(30) Priority: 17.12.2013 KR 20130157240
(43) Date of publication of application: 24.06.2015
(73) Proprietor: Seal and Pack Co., Ltd., Daewol-myeon Icheon-si, Gyeonggi-do 467-852 (KR)
(72) Inventor: Wei, Se-Hwang, 448-911 Gyeonggi-do (KR)
(74) Representative: Schmauder & Partner AG Patent- & Markenanwälte VSP

(56) References cited:
- EP-A1- 0 060 473
- JP-A- H 054 642
- US-A- 3 734 333
- US-A1- 2008 073 308
- US-A1- 2008 233 339

## Description

### BACKGROUND OF THE INVENTION

### 1. Field of the Invention

The present invention relates generally to sealing covers, according to the preamble of claim 1, which seal apertures of containers made of plastic, glass or the like and, more particularly, to a sealing cover for containers which has improved heat resistance, easy-opening performance and sealability.

### 2. Description of the Related Art

Generally, containers made of plastic, glass or the like have apertures.

The apertures of the containers must be sealed to protect contents contained in the containers or prevent fluid contents from leaking during distribution process of products. Typical caps, caps provided with shock absorption substances on inner surfaces thereof, heat sealing covers sealed on apertures of containers by thermal compression bonding, etc. are being used as sealers for sealing the apertures of the containers.

Formed by foaming polyolefin-based resin, an elastic foamed packing is a representative example of the shock absorption substances provided in the caps. Conduction type heat-seals, high-frequency induction heating seals, etc. are used as the heat sealing covers.

Recently, heat sealing covers are used increasingly to more reliably seal containers.

However, conventional foamed packings have a problem of low airtightness. Conventional heat sealing covers have superior airtightness but it is difficult to open an aperture of a container because a heat sealing cover is sealed on the aperture in such a way that it wraps the aperture. In an effort to overcome the above-mentioned problems, easy peel type heat sealing covers are used sometimes. However, such conventional heat sealing covers are problematic in that they cannot be used in containers for retort products because of low heat resistance.

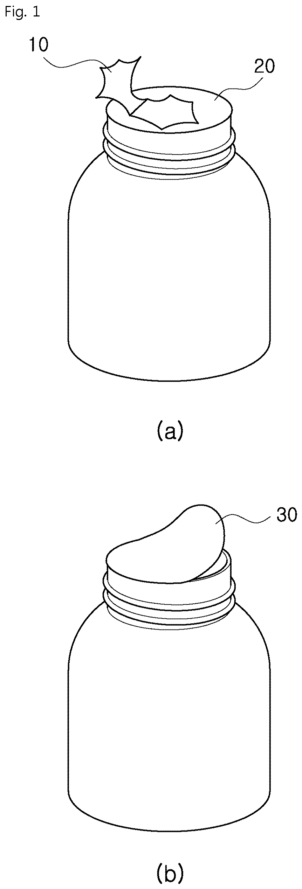

FIGS. 1(a) and 1(b) show examples of a conventional heat sealing cover having an opening tab.

FIG. 1(a) illustrates a heat sealing cover 20 which is configured such that a central portion thereof can be opened by means of an opening tab 10. In this heat sealing cover 20, an aperture of a container can be opened by the opening tab 10. However, it is difficult to pull contents out because the area of the open portion is comparatively small.

Meanwhile, FIG. 1(b) illustrates a heat sealing cover 30 which opens in a peeling manner. In the case of the heat sealing cover 30 having such a structure, the area of an opening portion can be as large as desired. However, since the entirety of the heat sealing cover 30 is peeled off, the sealing function is lost. That is, after the heat sealing cover 30 is peeled off, even when the container is covered with a cap again, leakage of fluid contents may be caused because of reduced close-contactability between the container and the cap.

Furthermore, the conventional heat sealing covers shown in FIGS. 1(a) and 1(b) are not adapted for retort products because of low heat resistance. Retort products are generally treated by vacuum sterilization at a high temperature of 130°C or more after the apertures of containers therefor have been sealed. If the heat resistance of the heat sealing cover is unsatisfactory, internal heat of the container is diffused to the outside through the heat sealing cover. As a result, the cap, inside which the heat sealing cover is disposed, may be damaged by heat transferred thereto through the heat sealing cover.

Examples of conventional heat sealing covers are described in Korean Patent Laid-open Publication No. 10-2009-0003222 (date: Jan. 09, 2009), Korean Patent Laid-open Publication No. 10-1984-0007700 (date: Dec. 10, 1984) and Japanese Patent Laid-open Publication No. P2012-81999 (date: Apr. 26, 2012) and in US 2008/073308 A1 and US 2008/233339 A1.

US 2008/073308 A1 (Yousif Pule, 2008.03.27.) discloses a container seal including a metal-free tab member. The container seal comprises a flexible, metal-free cover sheet and a flexible sealant sheet. The cover sheet comprises at least one layer of a flexible sheet material and includes a body portion that is sized and shaped to at least cover a container finish and has at least one metal-free tab portion extending from the periphery of the body portion.

US 2008/233339 A1 (Thorstensen-Woll Robert William, 2008.09.25.) discloses a sealing member for a container comprises a heat actuated sealant or adhesive layer for securing the sealing member to a container, a metal foil layer over and covering and adhesively bonded to the heat actuated sealant or adhesive layer, and a polyethylene or polypropylene foam or film layer over and covering and adhesively bonded to the foil layer.

JP H054642 A (Toppan Printing Co Ltd, 1993.01.14) discloses a sealing cover for containers comprising an opening guide cutting element which is substantially circular.

### SUMMARY OF THE INVENTION

Accordingly, the present invention has been made keeping in mind the above problems occurring in the prior art, and an object of the present invention is to provide a sealing cover for containers which has superior heat resistance so that it can be applied not only to a container for general purposes but also to a container for retort products.

Another object of the present invention is to provide a sealing cover for containers which has an opening structure capable of easy-opening and an opening area as large as needed to facilitate removal of contents from the container.

A further object of the present invention is to provide a sealing cover for containers which can provide a secondary sealing effect in which because a part of the sealing cover remains on a lip of an aperture of the container in an annular shape after the sealing cover has opened, when the container is covered with a cap again, the close contact between the container and the cap can be ensured by the elasticity and the shock absorbing effect of the remaining part of the sealing cover, thus reliably preventing contents from leaking.

In order to accomplish the above object, the present invention provides a sealing cover which is suitable for sealing an aperture of a container by heat adhesion, the sealing cover having an upper layer provided with an opening tab and a lower layer comprising an aluminum foil and a heat sealing adhesive layer for providing thermal adhesion to the container, the upper layer and the lower layer being integrated with each other via thermal adhesion using a heat adhesive resin or film.

According to the invention, the upper layer includes:
an annular opening guide cutting band (formed in the upper layer and configured such that when the opening tab is pulled, the upper layer and the lower layer open in a circumferential shape;
an opening cutting line formed in the upper layer along the opening guide cutting band,
an annular heat adhesive sealing band formed as an annular perimeter part of the sealing cover other than a central part thereof so as to remain on a lip of the aperture of the container,
wherein the opening tab is formed, in the upper layer, with the annular opening guide cutting band; and
in that the lower layer has heat resistance and thermally adheres to the annular heat adhesive sealing band and the annular opening guide cutting band of the upper layer,
wherein, when the opening tab is pulled, the annular opening guide cutting band is pulled in an upward and circumferential direction along the opening cutting line whereby the lower layer is separated from the container along the opening cutting line so that the aperture of the container enters an open state, and
the annular heat adhesive sealing band remains on the lip of the aperture of the container even after the aperture of the container opens so that a contact state between the aperture of the container and a cap can be effectively maintained when the aperture of the container is covered by the cap.

The upper layer may include a surface layer made of a polyester or polypropylene film that has no heat adhesive properties and has a thickness ranging from 0.012 mm to 0.04 mm.

The upper layer may include an intermediate substrate layer laminated under the surface layer, the intermediate substrate layer being made of a polyolefin-based foam film having a thickness ranging from 0.03 mm to 2 mm.

The upper layer may include a polyester film laminated under the intermediate substrate layer, the polyester film having a thickness ranging from 0.015 mm to 0.2 mm and made of material making the upper layer have increased tensile strength so that when the opening tab is pulled, the sealing cover can easily open without the opening tab being snapped.

The upper layer may include a first polypropylene film having heat-adhesive property and laminated under the polyester film, the first polypropylene film having a thickness ranging from 0.02 mm to 0.06 mm and being able to thermally adhere to the lower layer.

The lower layer may further include a second polypropylene film thermally-adhering to the first polypropylene film disposed at a lower end of the upper layer, the second polypropylene film being made of a same heat-adhesive material as a material of the first polypropylene film.

The aluminum foil may be laminated under the second polypropylene film and has a thickness ranging from 0.012 mm to 0.1 mm, the aluminum foil generating heat by high-frequency induction heating and substantially isolating an interior of the container from an exterior thereof to protect contents in the container.

The heat sealing adhesive layer may be laminated under the aluminum foil and is made of a heat-adhesive polypropylene to thermally-adhere to the container, the heat sealing adhesive layer withstanding a temperature of 130°C or more and having a thickness ranging from 0.02 mm to 0.08 mm.

The heat sealing adhesive layer may be made of one selected from among polyethylene, polyethylene terephthalate, ionomer and ethylene vinyl acetate.

An annular opening guide cutting band is formed in the upper layer and configured such that when the opening tab is pulled, the upper layer and the lower layer open along an inner circumferential surface of the aperture of the container in a circumferential shape.

An opening cutting line is formed in the upper layer along the opening guide cutting band.

The annular heat adhesive sealing band is formed in the upper layer outside the opening cutting line, .

### BRIEF DESCRIPTION OF THE DRAWINGS

The above and other objects, features and advantages of the present invention will be more clearly understood from the following detailed description taken in conjunction with the accompanying drawings, in which:
FIGS. 1(a) and 1(b) show examples of a conventional heat sealing cover having an opening tab;
FIGS. 2(a) and 2(b) are perspective views illustrating a container provided with a sealing cover for containers according to an embodiment of the present invention;
FIG. 3 illustrates pulling an opening tab of the sealing cover according to the present invention to open an aperture of the container;
FIG. 4 illustrates a process of forming the sealing cover according to the present invention;
FIGS. 5(a) and 5(b) illustrate, in a top view and in a side elevational view, respectively, the structure of an upper layer of the sealing cover according to the present invention; and
FIGS. 6(a) through 6(h) show a process of applying the sealing cover according to the present invention to the container.

### DESCRIPTION OF THE PREFERRED EMBODIMENTS

Hereinafter, an embodiment of the present invention will be described in detail with reference to the attached drawings.

The terms and words used in the specification and claims must not be limited to typical or dictionary meanings, but must be regarded as concepts selected by the inventor as concepts which best illustrate the present invention, and must be interpreted as having meanings and concepts adapted to the scope of the present invention to aid in understanding the technology of the present invention.

The present invention provides a sealing cover for a container which is formed of material having high thermal adhesive strength and heat resistance and is provided with an opening tab and an opening cutting line to facilitate opening of an aperture of the container, thus proving superior heat resistance and easy-opening performance.

Furthermore, the present invention provides a sealing cover for a container which is configured such that even after the aperture of the container is opened by means of the opening tab, a part of the sealing cover remains on a lip of the aperture of the container so that close contact between the container and a cap can be ensured when the container is closed.

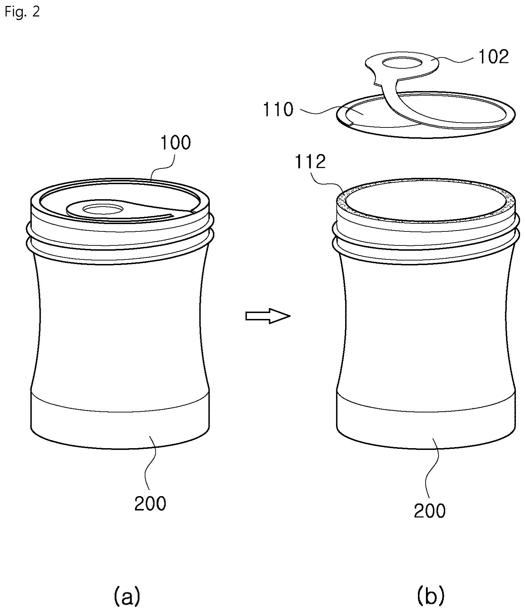

FIGS. 2(a) and 2(b) are perspective views showing a container 200 provided with a sealing cover 100 for containers according to the present invention.

Referring to FIG. 2(a), an aperture of the container 200 is sealed with the sealing cover 100 according to the present invention.

Referring to FIG. 2(b), when an opening tab 102 is pulled, a central part 110 of the sealing cover 100 is separated from the container 200 so that the aperture of the container 200 enters an open state. Upon this, an annular perimeter part (112, a heat adhesive sealing band) of the sealing cover 100 other than the central part 110 remains on the lip of the aperture of the container 200.

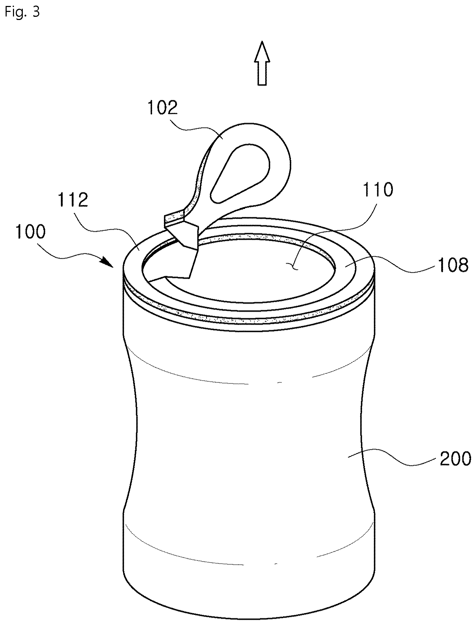

FIG. 3 illustrates pulling the opening tab 102 of the sealing cover 100 according to the present invention to open the aperture of the container 200.

Referring to FIG. 3, if the opening tab 102 provided on an upper surface of the sealing cover 100 is pulled upwards, the central part 110 of the sealing cover 100 is separated from the container 200 along an opening guide band (not shown) formed around an inner circumferential surface of the aperture of the container 200.

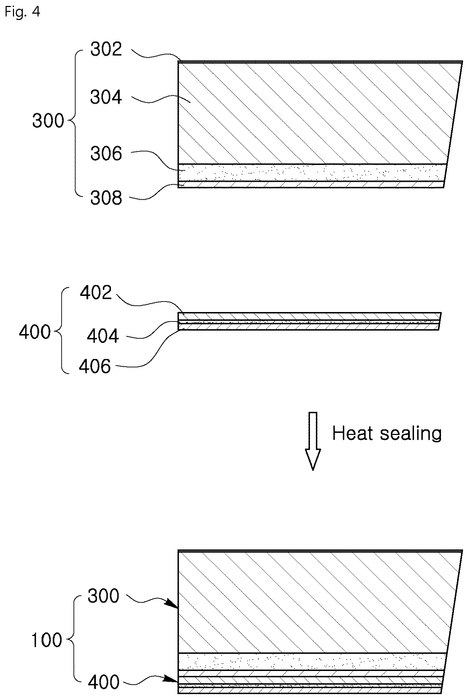

FIG. 4 illustrates a process of forming the sealing cover 100 according to the present invention.

Referring to FIG. 4, as will be described in more detail later herein, the sealing cover 100 according to the present invention is formed by forming an upper layer 300 provided with the opening tab 102 and a lower layer 400 having heat resistance, and then thermally adhering the upper layer 300 to and the lower layer 400 to form an integrated body.

The upper layer 300 can be made of various kinds of plastic films, foams, etc. Based on FIG. 4, a surface layer 302 is disposed at the uppermost layer and is formed of a polyester film that has a thickness ranging from 0.012 mm to 0.025 mm and has no heat adhesive property. As needed, a variety of patterns may be printed on the surface layer 302.

An intermediate substrate layer 304 is disposed under the surface layer 302 and is a film or sheet that has a thickness ranging from 0.1 mm to 2 mm and is made of polyolefin-based foam. The intermediate substrate layer 304 is laminated under the surface layer 302.

When a cap 210 is coupled to the container 200, the close-contactability between the cap 210 and the container 200 is increased by the elasticity of the intermediate substrate layer 304. Furthermore, because the intermediate substrate layer 304 is formed of a foam sheet having an appropriate thickness, it can provide a heat insulation function of preventing heat generated from an aluminum foil 404 of the lower layer 400 by high-frequency induction heating from being transferred to the surface layer 302. Thereby, the cap 210 can be prevented from being deformed by heat generated during a thermal bonding operation.

A polyester film layer 306 that has a thickness ranging from 0.03 mm to 0.2 mm is laminated under the intermediate substrate layer 304. The polyester film layer 306 performs a very important function. In detail, thanks to the high tensile strength of the polyester film, sufficient tensile strength is given to the entire of the upper layer 300. Thereby, when the sealing cover 100 that has been sealed on the container 200 is removed from the container 200 to open the aperture thereof, the opening tab 102 of the upper layer 300 can be prevented from being snapped from a ring-shaped opening cutting band, and the opening tab 102 that is provided on the upper layer 300 and the central part 110 of the sealing cover 100 that is disposed inside the annular opening cutting line can be easily cut off.

Having heat adhesive properties and having a thickness ranging from 0.02 mm to 0.06 mm, a first polypropylene film layer 308 is laminated under the polyester film layer 306. The first polypropylene film layer 308 thermally adheres to a second polypropylene film layer 402 that is disposed at the uppermost layer of the lower layer 400 and is made of the same thermal adhesive material as that of the first polypropylene film layer 308.

As described above, in the lower layer 400 which is heat-sealed on the container 200, the second polypropylene film layer 402 which has heat adhesive properties is disposed at the uppermost layer, and the aluminum foil 404 that has an appropriate thickness ranging from 0.012 mm to 0.1 mm is laminated under the second polypropylene film layer 402. The aluminum foil 404 generates heat resulting from high-frequency induction heating and functions to substantially isolate the interior of the container 200 from the outside.

A heat sealing adhesive layer 406 is applied to a lower surface of the aluminum foil 404 by laminating or coating. In the case of the container 200 that is made of polypropylene which is suitable for retort, the heat sealing adhesive layer 406 is formed of a polypropylene film which has heat adhesive properties and has an appropriate thickness ranging from 0.03 mm to 0.1 mm. If container 200 is made of material such as glass, polyethylene or polyethylene terephthalate, the heat sealing adhesive layer 406 is coated with a polyethylene, polyethylene terephthalate, ionomer or ethylene vinyl acetate film or resin (polymer) which has heat adhesive properties.

Having the above-mentioned structures, the upper layer 300 and the lower layer 400 thermally adhere to each other, thus forming the sealing cover 100. Before the upper layer 300 thermally adheres to the lower layer 400, an opening tab 102, an opening guide cutting line 104, an opening cutting line 106 and an annular opening guide cutting band 108 are formed in the upper layer 300.

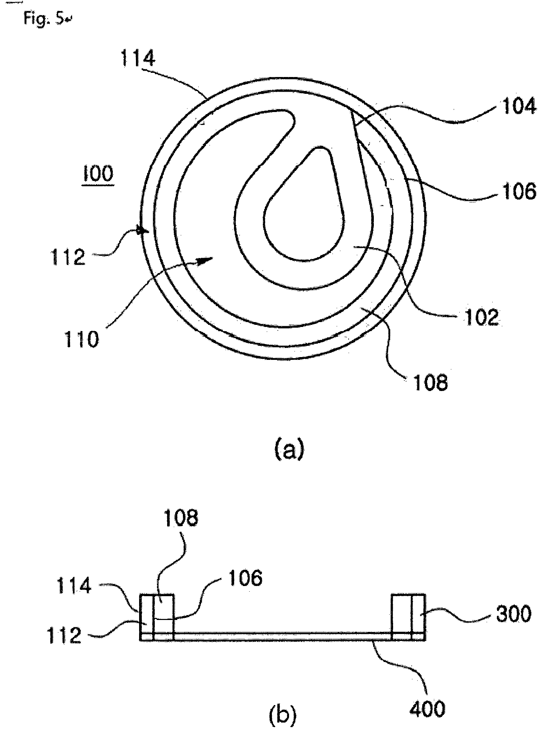

FIGS. 5(a) and 5(b) illustrate the structure of the upper layer 300 of the sealing cover 100 according to the present invention.

Referring to FIGS. 5(a) and 5(b), the upper layer 300 of the sealing cover 100 according to the present invention includes the opening tab 102, the opening guide cutting line 104, the opening cutting line 106, the opening guide cutting band 108, an outer cutting line 114 and the heat adhesive sealing band 112. That is, after the opening tab 102, the opening guide cutting line 104, the opening cutting line 106 and the outer cutting line 114 are formed in the upper layer 300 that has the structure illustrated in FIG. 4, unnecessary portions are cut off from the upper layer 300 such that the opening tab 102, the opening guide cutting band 108 and the heat adhesive sealing band 112 are formed in the upper layer 300.

The upper layer 300, in which the opening tab 102, the opening guide cutting line 104, the opening cutting line 106, the annular opening guide cutting band 108, the heat adhesive sealing band 112, etc. are formed, thermally adheres to the lower layer 400.

The annular opening guide cutting band 108 is formed in the upper layer along an inner circumferential surface of the aperture of the container.

An opening cutting line 106 is formed in the upper layer 300 along the opening guide cutting band.

The annular heat adhesive sealing band 112 may be formed in the upper layer 300 outside the opening cutting line 106.

The opening tab 102 is formed in the upper layer 300 and connected to the opening guide cutting band 108 as shown in Fig. 5(a).

The opening guide cutting line 104 is a cutting line which is formed between the opening tab 102 and the opening cutting line 106. The term "cutting line" refers to a line which makes the lower layer 400 be easily torn when the opening tab 102 is pulled.

Referring to FIGS. 5(a) and 5(b) again, heat adhesion is applied only to the opening guide cutting band 108 other than the opening tab 102 and to the heat adhesive sealing band 112 which substantially adheres to the container. As such, only the annular bands 108 and 112, the upper layer 300 and the lower layer 400 thermally adhere to each other. Finally, a cutting or punching operation is conducted in accordance with the outer cutting line 114, meeting standard requirements of the container, thus completing the sealing cover 100.

The principle of opening the aperture of the container 200 using the opening tab 102 is as follows.

Referring to FIGS. 5(a) and 5(b) again, when a user grasps the opening tab 102 that has not thermally adhered to the lower layer 400 with his/her hand and pulls it upwards, beginning with the opening guide cutting line 104 at which the upper layer 300 has thermally adhered to the lower layer 400, the annular opening guide cutting band 108 is pulled in an upward and circumferential direction along the opening cutting line 106. Then, the lower layer 400 is separated from the container in such a way that it is torn or cut out along the opening cutting line 106 of the upper layer 300 that has been previously cut. As a result, the aperture of the container 200 can be opened.

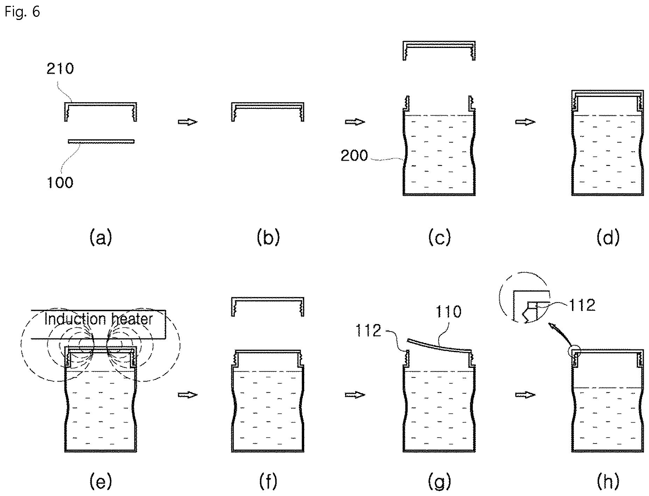

FIGS. 6(a) through 6(h) show a process of applying the sealing cover 100 to the container 200.

As shown in FIGS. 6(a) through 6(d), the sealing cover 100 according to the present invention is installed in the cap 210.

Thereafter, as shown in FIG. 6(e), the cap 210 is coupled to the container 200, and then the sealing cover 100 is bonded and sealed on the aperture of the container 200 by induction heating.

To use contents contained in the container 200, the user first removes the cap 210 from the container 200 as shown in Fig. 6(f). Thereafter, the user grasps the opening tab 102 and pulls it upwards as shown in Fig. 6(g), thus opening the aperture of the container 200. An annular perimeter part (112) of the sealing cover 100 other than the central part 110 remains on the lip of the aperture of the container 200 as shown in Fig. 6(h).

As described above, in a sealing cover for containers according to the present invention, the sealing cover provided with an aluminum foil is configured such that it is firmly thermally sealed on the aperture of a container, whereby contents in the container can be reliably protected.

Furthermore, the sealing cover according to the present invention has therein an opening tab, an opening guide cutting line, an opening cutting line and an opening guide cutting band, so that opening the aperture of the container can be facilitated.

Moreover, the sealing cover according to the present invention provides not only a primary sealing effect before the container opens but also a secondary sealing effect in which because a part of the sealing cover remains on a lip of an aperture of the container in an annular shape after the container has been opened, and when the cap is coupled to the container again, the close contact between the container and the cap can be ensured by the elasticity and the shock absorbing effect of the sealing cover, thus reliably preventing contents from leaking.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A sealing cover for containers, being suitable for sealing an aperture of a container by heat adhesion, the sealing cover having an upper layer (300) provided with an opening tab (102) and a lower layer (400) comprising an aluminum foil (404) and a heat sealing adhesive layer (406) for providing thermal adhesion to the container, the upper layer (300) and the lower layer (400) being integrated with each other via thermal adhesion using a heat adhesive resin or film,
**characterized in that** the upper layer (300) includes:
an annular opening guide cutting band (108) formed in the upper layer (300) and configured such that when the opening tab (102) is pulled, the upper layer (300) and the lower layer (400) open in a circumferential shape;
an opening cutting line (106) formed in the upper layer (300) along the opening guide cutting band (108),
an annular heat adhesive sealing band (112) formed as an annular perimeter part of the sealing cover (100) other than a central part (110) thereof so as to remain on a lip of the aperture of the container,
wherein the opening tab (102) is formed, in the upper layer (300), with the annular opening guide cutting band (108); and
**in that** the lower layer (400) has heat resistance and thermally adheres to the annular heat adhesive sealing band (112) and the annular opening guide cutting band (108) of the upper layer (300),
wherein, when the opening tab (102) is pulled, the annular opening guide cutting band (108) is pulled in an upward and circumferential direction along the opening cutting line (106) whereby the lower layer (400) is separated from the container along the opening cutting line (106) so that the aperture of the container enters an open state, and
the annular heat adhesive sealing band (112) remains on the lip of the aperture of the container even after the aperture of the container opens so that a contact state between the aperture of the container and a cap can be effectively maintained when the aperture of the container is covered by the cap.

2. The sealing cover as set forth in claim 1, wherein the upper layer (300) comprises a surface layer (302) made of a polyester or polypropylene film that has no heat adhesive properties and has a thickness ranging from 0.012 mm to 0.04 mm.

3. The sealing cover as set forth in claim 2, wherein the upper layer (300) further comprises an intermediate substrate layer (304) laminated under the surface layer (302), the intermediate substrate layer (304) being made of a polyolefin-based foam film having a thickness ranging from 0.03 mm to 2 mm.

4. The sealing cover as set forth in claim 3, wherein the upper layer (300) further comprises
a polyester film (306) laminated under the intermediate substrate layer (304), the polyester film (306) having a thickness ranging from 0.015 mm to 0.2 mm and made of material making the upper layer (300) have increased tensile strength so that when the opening tab (102) is pulled, the sealing cover can easily open without the opening tab (102) being snapped.

5. The sealing cover as set forth in claim 4, wherein the upper layer (300) further comprises
a first polypropylene film (308) having heat-adhesive property and laminated under the polyester film (308), the first polypropylene film having a thickness ranging from 0.02 mm to 0.06 mm and being able to thermally adhere to the lower layer (400).

6. The sealing cover as set forth in claim 5, wherein the lower layer (400) further comprises: a second polypropylene film (402) having a same heat adhesive property as that of the first polypropylene film (308), the second polypropylene film (402) thermally-adhering to the first polypropylene film (308);
wherein the aluminum foil (404) is laminated under the second polypropylene film (402); and
the heat sealing adhesive layer (406) is laminated under the aluminum foil (404).

7. The sealing cover as set forth in claim 6, wherein the aluminum foil (402) is laminated under the second polypropylene film (402) and has a thickness ranging from 0.012 mm to 0.1 mm, the aluminum foil (402) suitable for generating heat by high-frequency induction heating and substantially isolating an interior of the container from an exterior thereof to protect contents in the container.

8. The sealing cover as set forth in claim 6, wherein the heat sealing adhesive layer is laminated under the aluminum foil (404) and is made of a heat-adhesive polypropylene to thermally-adhere to the container, the heat sealing adhesive layer (406) withstanding a temperature of 130°C or more and having a thickness ranging from 0.02 mm to 0.08 mm.

9. The sealing cover as set forth in claim 6, wherein the heat sealing adhesive layer (406) is made of one selected from among polyethylene, polyethylene terephthalate, ionomer and ethylene vinyl acetate.

10. The sealing cover as set forth in claim 1, wherein the upper layer (300) further comprises an opening guide cutting line (104) which is formed between the opening tab (102) and the opening cutting line (106).

## Patentansprüche

1. Verschlussdeckel für Behälter, geeignet zum Abdichten einer Öffnung eines Behälters mittels Heissklebung, wobei der Verschlussdeckel eine mit einer Öffnungslasche (102) versehene obere Schicht (300) sowie eine untere Schicht (400), die eine Aluminiumfolie (404) und eine Heisssiegelkleberschicht (406) zum Bewirken einer Heissklebung an dem Behälter umfasst, wobei die obere Schicht (300) und die untere Schicht (400) miteinander durch thermische Klebung mittels eines Wärmekleberharzes oder -films vereint sind,
**dadurch gekennzeichnet, dass** die obere Schicht (300) umfasst:
ein kreisförmiges Öffnungsführungsaufreissband (108), das in der oberen Schicht (300) ausgebildet und so konfiguriert ist, dass, wenn die Öffnungslasche (102) gezogen wird, sich die obere Schicht (300) und die untere Schicht (400) in einer Umfangsform öffnen;
eine Öffnungs-Aufreisslinie (106), die in der oberen Schicht (300) entlang des Öffnungsführungsaufreissbandes (108) ausgebildet ist,
ein ringförmiges Heisskleberdichtungsband (112), das als ringförmiges Umfangsteil des Verschlussdeckels (100) anders als dessen zentraler Teil (110) so ausgebildet ist, dass es an einer Lippe der Öffnung des Behälters verbleibt,
wobei die Öffnungslasche (102) in der oberen Schicht (300) mit dem kreisförmigen Öffnungsführungsaufreissband (108) ausgebildet ist und
dass die untere Schicht (400) wärmebeständig ist und thermisch an der Heisssiegelkleberschicht (112) und am kreisförmigen Öffnungsführungsaufreissband (108) der oberen Schicht (300) haftet,
wobei, wenn die Öffnungslasche (102) gezogen wird, das kreisförmige Öffnungsführungsaufreissband (108) in einer Aufwärts- und Umfangsrichtung entlang der Öffnungsschneidlinie (106) gezogen wird, wodurch die untere Schicht (400) vom Behälter entlang der Öffnungsschneidlinie (106) getrennt wird, sodass die Öffnung des Behälters in einen offenen Zustand übergeht, und
die ringförmige Heisssiegelkleberschicht (112) an der Lippe der Öffnung des Behälters verbleibt, selbst nachdem sich die Öffnung des Behälters geöffnet hat, sodass ein Kontaktzustand zwischen der Öffnung des Behälters und einem Deckel effektiv beibehalten werden kann, wenn die Öffnung des Behälters durch den Deckel bedeckt ist.

2. Verschlussdeckel nach Anspruch 1, wobei die obere Schicht (300) eine Oberflächenschicht (302) aus einem Polyester- oder Polypropylenfilm umfasst, die keine Heissklebereigenschaften aufweist und eine Dicke im Bereich von 0.012 mm bis 0.04 mm besitzt.

3. Verschlussdeckel nach Anspruch 2, wobei die obere Schicht (300) weiterhin eine intermediäre Substratschicht (304) umfasst, die unter der Oberflächenschicht (302) laminiert ist, wobei die intermediäre Substratschicht (304) aus einer polyolefinbasierten Schaumfolie mit einer Dicke im Bereich von 0.03 mm bis 2 mm hergestellt ist.

4. Verschlussdeckel nach Anspruch 3, wobei die obere Schicht (300) weiterhin umfasst
eine Polyesterfolie (306), die unter die intermediäre Substratschicht (304) laminiert ist, wobei die Polyesterfolie (306) eine Dicke im Bereich von 0.015 mm bis 0.2 mm aufweist und aus einem Material gebildet ist, das der oberen Schicht (300) eine erhöhte Zugfestigkeit verleiht, sodass, wenn die Öffnungslasche (102) gezogen wird, der Verschlussdeckel einfach geöffnet werden kann, ohne dass die Öffnungslasche (102) abgerissen wird.

5. Verschlussdeckel nach Anspruch 4, wobei die obere Schicht (300) weiterhin umfasst
eine erste Polypropylenfolie (308) mit Heissklebereigenschaft, die unter die Polyesterfolie (308) laminiert ist, wobei die erste Polypropylenfolie eine Dicke im Bereich von 0.02 mm bis 0.06 mm aufweist und fähig ist, thermisch an der unteren Schicht (400) zu haften.

6. Verschlussdeckel nach Anspruch 5, wobei die untere Schicht (400) weiterhin einen zweiten Polypropylenfilm (402) mit derselben Heissklebereigenschaft wie diejenige des ersten Polypropylenfilms (308) umfasst, wobei der zweite Polypropylenfilm (402) thermisch am ersten Polypropylenfilm (308) haftet;
wobei die Aluminiumfolie (404) unter den zweiten Polypropylenfilm (402); laminiert ist und
die Heisssiegelkleberschicht (406) unter die Aluminiumfolie (404) laminiert ist.

7. Verschlussdeckel nach Anspruch 6, wobei die Aluminiumfolie (402) unter den zweiten Polypropylenfilm (402) laminiert ist und eine Dicke im Bereich von 0.012 mm bis 0.1 mm besitzt, wobei die Aluminiumfolie (402) zur Erzeugung von Wärme durch Hochfrequenzinduktionsheizung und im Wesentlichen zur Isolierung eines Innenraums des Behälters von dessen Aussenseite geeignet ist, um Inhalte im Behälter zu schützen.

8. Verschlussdeckel nach Anspruch 6, wobei die Heisssiegelkleberschicht unter die Aluminiumfolie (404) laminiert ist und aus einem Heisskleberpolypropylen hergestellt ist, um thermisch am Behälter zu haften, wobei die Heisssiegelkleberschicht (406) einer Temperatur von 130°C oder mehr standhält und eine Dicke im Bereich von 0.02 mm bis 0.08 mm besitzt.

9. Verschlussdeckel nach Anspruch 6, wobei die Heisssiegelkleberschicht (406) aus einem ausgewählt aus Polyethylen, Polyethylenterephthalat, lonomer und Ethylenvinylacetat hergestellt ist.

10. Verschlussdeckel nach Anspruch 1, wobei die obere Schicht (300) weiterhin eine Öffnungsführungsaufreissline (104) umfasst, welche zwischen der Öffnungslasche (102) und der Öffnungsaufreissline (106) ausgebildet ist.

## Revendications

1. Couvercle de fermeture étanche destiné à des récipients et susceptible d'assurer l'étanchéité d'une ouverture d'un récipient par adhésion à chaud, ce couvercle de fermeture étanche comprenant une couche supérieure (300) équipée d'une languette d'ouverture (102) et une couche inférieure (400) comportant une feuille d'aluminium (404) et une couche adhésive (406) de fermeture étanche sous l'action de la chaleur permettant d'obtenir une adhésion à chaud avec le récipient, la couche supérieure (300) et la couche inférieure (400) étant intégrées l'une à l'autre par adhésion à chaud en utilisant une résine ou un film adhésif sous l'action de la chaleur,
**caractérisé en ce que**
la couche supérieure (300) comprend :
- une bande de découpe annulaire (108) de guidage de l'ouverture formée dans la couche supérieure (300) et réalisée de sorte que, lorsque la languette d'ouverture (102) est tirée, la couche supérieure (300) et la couche inférieure (400) s'ouvrent selon une forme circonférentielle,
- une ligne de découpe d'ouverture (106) formée dans la couche supérieure (300) le long de la bande de découpe de guidage de l'ouverture (108),
- une bande d'étanchéité annulaire (112) adhésive sous l'action de la chaleur réalisée sous la forme d'une partie périphérique annulaire du couvercle de fermeture étanche (100) autre que sa partie centrale (110) de façon à rester sur une lèvre de l'ouverture du récipient,
la languette d'ouverture (102) étant formée dans la couche supérieure (300) avec la bande de découpe annulaire de guidage de l'ouverture (108), et
la couche inférieure (400) a une résistance à la chaleur et adhère à chaud à la bande de fermeture étanche annulaire adhésive sous l'action de la chaleur (112) et à la bande de découpe annulaire de guidage de l'ouverture (108) de la couche supérieure (300),
couvercle de fermeture étanche dans lequel, lorsque la languette d'ouverture (102) est tirée, la bande de découpe annulaire de guidage de l'ouverture (108) est tirée vers le haut en direction périphérique le long de la ligne de découpe de l'ouverture (106), la couche inférieure (400) étant séparée du récipient le long de la ligne de découpe de l'ouverture (106) de sorte que l'ouverture du récipient passe à l'état ouvert, et
la bande de fermeture étanche annulaire adhésive sous l'action de la chaleur (112) restant sur la lèvre de l'ouverture du récipient même après l'ouverture du récipient de sorte qu'un contact entre l'ouverture du récipient et un capuchon puisse être efficacement maintenu lorsque l'ouverture du récipient est recouverte par ce capuchon.

2. Couvercle de fermeture étanche conforme à la revendication 1,
dans lequel la couche supérieure (300) comporte une couche de surface (302) réalisée en un film de polyester ou de polypropylène qui n'a pas de propriétés d'adhésion à chaud et a une épaisseur située dans la plage de 0,012 mm à 0,04 mm.

3. Couvercle de fermeture étanche conforme à la revendication 2,
dans lequel la couche supérieure (300) comporte en outre une couche de substrat intermédiaire (304) feuilletée au-dessous de la couche de surface (302), la couche de substrat intermédiaire (304) étant réalisée en un film de mousse à base de polyoléfine ayant une épaisseur située dans la plage de 0,03 mm à 2 mm.

4. Couvercle de fermeture étanche conforme à la revendication 3,
dans lequel la couche supérieure (300) comporte en outre :
un film en polyester (306) feuilleté sous la couche de substrat intermédiaire (304), ce film de polyester (306) ayant une épaisseur située dans la plage de 0,015 mm à 0,2 mm et étant réalisé en un matériau conférant à la couche supérieure (300) une résistance à la traction augmentée de sorte que lorsque la languette d'ouverture (102) est tirée, le couvercle de fermeture étanche puisse facilement s'ouvrir sans que la languette d'ouverture (102) ne soit déchirée.

5. Couvercle de fermeture étanche conforme à la revendication 4,
dans lequel la couche supérieure (300) comprend en outre :
un premier film de polypropylène (308) ayant des propriétés d'adhésion à chaud et feuilleté sous le film en polyester (308), le premier film en polypropylène ayant une épaisseur située dans la plage de 0,02 mm à 0,06 mm et étant susceptible d'adhérer sous l'action de la chaleur à la couche inférieure (400).

6. Couvercle de fermeture étanche conforme à la revendication 5,
dans lequel la couche inférieure (400) comporte en outre un second film en polypropylène (402) ayant la même propriété d'adhésion à chaud que le premier film en polyéthylène (308), le second film en polypropylène (402) adhérant sous l'action de la chaleur au premier film en polypropylène (308),
la feuille en aluminium (404) étant feuilletée sous le second film en polypropylène (402), et
la couche adhésive d'étanchéité à chaud (406) étant feuilletée sous la feuille en aluminium (404).

7. Couvercle de fermeture étanche conforme à la revendication 6,
dans lequel la feuille en aluminium (402) est feuilletée sous le second film en polypropylène (402) et a une épaisseur située dans la plage de 0,012 mm à 0,1 mm, la feuille en aluminium (402) étant susceptible de générer de la chaleur par chauffage par induction haute fréquence, et isolant essentiellement la partie interne du récipient de l'extérieur de manière à protéger le contenu de ce récipient.

8. Couvercle de fermeture étanche conforme à la revendication 6,
dans lequel la couche adhésive d'étanchéité à chaud est feuilletée sous la feuille en aluminium (404) et est réalisée en un polypropylène adhésif sous l'action de la chaleur de façon à adhérer à chaud au récipient, la couche adhésive d'étanchéité à chaud (406) résistant à une température de 130°C ou plus et ayant une épaisseur située dans la plage de 0,02 mm à 0,08 mm.

9. Couvercle de fermeture étanche conforme à la revendication 6,
dans lequel la couche adhésive d'étanchéité à chaud (406) est réalisée en un matériau choisi parmi les matériaux suivants : polyéthylène, polyéthylène téréphtalate, ionomère et éthylène vinyl acétate.

10. Couvercle de fermeture étanche conforme à la revendication 1,
dans lequel la couche supérieure (300) comporte en outre une ligne de découpe de guidage de l'ouverture (104) qui est formée entre la languette d'ouverture (102) et la ligne de découpe de l'ouverture (106).
